# EUROPEAN PATENT SPECIFICATION

(11) **EP 2 191 990 B1**
(45) Date of publication and mention of the grant of the patent: **31.08.2011**
(21) Application number: 09176512.3
(22) Date of filing: 19.11.2009
(51) Int. Cl.: B60H 1/00, B60H 1/32

(54) **Method and system for storage of cold in a vehicle air conditioning system**
Verfahren und System zur Kältespeicherung in einer Fahrzeugklimaanlage
Système et procédé pour le stockage du froid dans un système de climatisation de véhicule

(30) Priority: 27.11.2008 SE 0850104
(43) Date of publication of application: 02.06.2010
(73) Proprietor: Scania CV AB (publ), 151 87 Södertälje (SE)
(72) Inventor: Hall, Ola, SE-117 67, STOCKHOLM (SE)

(56) References cited:
- EP-A1- 1 407 905
- EP-A1- 1 967 396
- EP-A2- 1 457 676
- WO-A1-01/40005
- DE-A1- 10 349 291
- US-A1- 2005 066 669
- US-A1- 2005 086 953
- US-A1- 2006 137 853
- US-A1- 2007 204 640

## Description

### TECHNICAL FIELD

The present invention relates generally to compressor-driven AC systems with a closed refrigerant circuit comprising at least a condenser and an evaporator. The invention relates more specifically to a method and a system for providing and storing extra-cold coolant in a vehicle's cooling system and at the same time preventing freezing problems. The invention relates in particular to AC systems which comprise at least a liquid-cooled evaporator and a low-temperature cooling circuit for conveying cold coolant to a cooling element situated in, for example, the driver's space of the vehicle.

### TECHNOLOGICAL BACKGROUND

AC systems in vehicles usually comprise a closed pressurised refrigerant circuit comprising a compressor, an air-cooled condenser situated at or near the front of the vehicle, an air-warmed evaporator situated at an appropriate location in the vehicle's cab, e.g. in or under the instrument panel, and pipelines or hoses which connect these components together to form a hermetically sealed system which usually comprises also an expansion means and a dry filter or an accumulator. A number of different gases may be used as refrigerant, but R134a is often used in vehicle applications.

In heavy commercial vehicles, e.g. vehicles with tiltable cabs, with long distances between the compressor, which is often situated near to the engine, and the cab's heat exchanger or cooling element, it may be of advantage to use a further cooling loop, a so-called secondary cooling circuit. This further secondary cooling circuit will be connected to the compressor system's evaporator via a liquid-based heat exchanger co-assembled with the evaporator. The coolant, commonly water or a mixture of water and glycol, is thus cooled in the evaporator and is pumped to the cab and to the cooling element situated therein and cools the cab's air by means of a fan. An AC system of said kind is normally used for cooling the cab's air, while a separate water-borne and often engine-heated warming system is used for warming the air in the cab as necessary.

Running an AC system's compressor does of course involve an energy cost. The compressor is usually belt-driven and is therefore driven via a belt pulley which is itself driven by the engine. Running the compressor therefore somewhat increases the vehicle's fuel consumption.

When the vehicle is travelling under its own momentum, without the engine delivering any torque, e.g. on sloping terrain or downgrades, or when the vehicle is being braked, the running of the compressor does not involve any fuel consumption. Instead, it exerts a certain braking effect on the vehicle. It is therefore desirable to run the AC compressor to the maximum extent during the time when the engine is not delivering positive torque, i.e. at zero torque when the driver is not applying any power or at negative torque when the engine exerts braking torque and imparts a braking effect.

A problem with this is that if the compressor is allowed to run at full capacity for long periods of time, the coolant in the secondary cooling circuit will cool down to temperatures below zero degrees. This means that the temperature in the cab's cooling element also drops below freezing point, leading inter alia to air at an unpleasantly low temperature flowing out in the cab, but a more serious aspect is that the condensate which substantially always occurs in the cab's cooling element unless the air humidity in the cab is extremely low will freeze in the cooling element. More and more condensate will gradually freeze, creating ice which progressively hinders the air flow and jeopardises the functioning of the cooling element.

It is desirable to be able to store cold when the vehicle is travelling at zero torque or at negative torque, in a manner harmless to the cooling system, and thereafter to use the stored cold gradually as required. As the number of components in a vehicle needs for both economic and space-saving reasons to be minimised, it is advantageous if existing components of the vehicle's AC system can be used.

Various systems and solutions whereby an AC compressor is run when there is zero torque from the engine are already known.

EP1457676 describes for example an AC system whereby a cooling compressor is run on downgrades. The invention is mainly concerned with how the displacement in a variable compressor can be increased and decreased. Storage of cold and simultaneous prevention of freezing are not described in detail.

US20070204640 refers also to a system with a cooling compressor which is run on downgrades. A storage facility is provided and intended for refrigerants at high and low pressure. The storage facility becomes "charged" when the vehicle travels on downgrades. Emptying the reservoir too quickly will cause freezing. An expansion valve or constriction in conjunction with a thermostat is used to reduce the risk of freezing.

WO0140005 describes a cooling compressor which is run on downgrades. A KER (kinetic energy regenerator) is used to help save energy. The function differs from the above invention. US20050066669 describes a system which activates the cooling compressor when the vehicle's speed decreases, even if there is at the time no cooling requirement. This is done to save fuel. The system does not lower the coolant temperature to below the freezing level of zero degrees. The potential saving is slight unless extra coolant mass is supplied, which should of course be avoided to save weight in the vehicle.

EP1967396 discloses a method for storage of cold in a vehicle-based cooling system, comprising cooling of a liquid by means of a compressor-driven refrigerant circuit with at least a condenser and an evaporator, in which at least the evaporator is co-assembled with a liquid-based heat exchanger, and a low-tempreature cooling circuit provided with a coolant pump for conveying preferably cold coolant to a cooling element, whereby the coolant's flow velocity is regulated through the secondary cooling circuit so that the flow to the cooling element increases if the air tempreature after the cooling element is higher than a predetermined set-point value, and the flow decreases if the air tempreature after the cooling element is lower than the set-point value.

EP1407905 describes an air conditioning unit for a motor vehicle comprising many compartments to lead and condition the air stream and a cooling circuit and vaporizer. A control unit uses an engine condition signal to determine the actual and expected operating conditions from which compartments and/or parameters are controlled. Furthermore, the document describes the feature of using vehicle momentum to charge the cold storage below zero degrees.

None of the patents cited use a secondary control unit adapted to regulating the coolant's flow velocity through the secondary cooling circuit and the coolant's temperature downstream of the evaporator so that freezing of condensate in the cooling element is prevented. The state of the art does not indicate how it is possible to use the compressor system and a secondary cooling circuit in a vehicle effectively for storing cold and using it gradually as the need arises.

### OBJECTS AND MOST IMPORTANT CHARACTERISTICS OF THE INVENTION

The object of the invention is to solve said problems and propose a method and a system for cost-effective storage of cold in a vehicle's coolant system.

A further object of the invention is to keep down the coolant volume, the mass and the number of components in the vehicle's cooling system and yet indicate a solution for storing of cold and saving of fuel.

These and other objects are achieved according to the invention by a method and a system according to the features indicated in claims 1 and 5.

The invention is effected substantially by the AC compressor being allowed to run a great deal extra when the vehicle's engine is not delivering any torque or when the engine's torque is negative, i.e. when the vehicle is travelling under its own momentum, e.g. on sloping terrain or downgrades, or is being braked. In such situations, the refrigerant circuit cools the coolant in the AC system's secondary cooling circuit, which is used for cooling, for example, the vehicle's cab, a great deal extra and down to temperatures below zero degrees. The coolant's flow velocity is regulated according to the invention by an adjustable-speed pump which controls the flow in the cooling circuit in such a way as to provide a comfortable air temperature in the cab and prevent freezing in the cooling element. The invention increases the storage capacity for cold in the cooling system and makes it possible for the compressor to operate to a particularly great extent when the vehicle's engine is not delivering any torque, thereby saving fuel.

Further features and advantages of the invention are indicated by the more detailed description of the invention set out below and the attached drawings and other claims.

### BRIEF LIST OF THE DRAWINGS

The invention is described below in more detail in the form of a preferred embodiment example with reference to the attached drawings.
**Figure 1** represents the state of the art and depicts schematically a normal configuration of a commonly occurring compressor-driven cooling system.
**Figure 2** shows how a commonly occurring compressor-driven cooling system, e.g. according to Figure 1, is normally regulated.
**Figure 3** depicts schematically the configuration of a compressor-driven cooling system according to the invention.
**Figure 4** depicts a flowchart of how the coolant pump is regulated in a cooling system according to the invention.
**Figure 5** depicts a flowchart of how the compressor is regulated in a cooling system according to the invention.
**Figure 6** depicts a comprehensive flowchart in which the process steps according to Figures 4 and 5 are combined to form a single common process.

### DESCRIPTION OF PREFERRED EMBODIMENTS

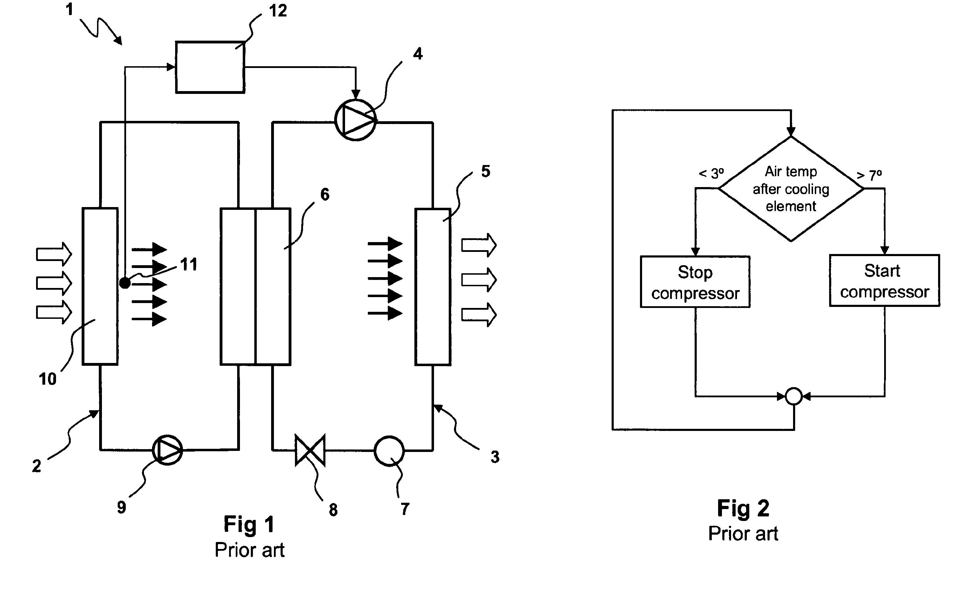

**Figure 1** depicts in a vehicle a possible configuration of a simple and commonly occurring compressor-driven cooling system **1** provided with a secondary cooling circuit **2.** A primary compressor-driven refrigerant circuit **3** comprises in a known manner a closed flow circuit filled with a refrigerant, usually a gas under pressure. The refrigerant circuit **3** comprises a compressor **4,** an air-cooled condenser **5,** an evaporator **6,** a dry filter **7** and an expansion means **8,** and these components are connected to one another by a system of lines. The compressor **4** pumps the refrigerant round in the circuit **3** so that heat is given off in a known manner in the condenser **5** and heat is absorbed in the evaporator **6.** In this example, the refrigerant circuit's evaporator **6** is co-assembled with a liquid-based heat exchanger which cools the coolant in the secondary cooling circuit **2.** The system's condenser **5** gives off the surplus heat to the surrounding air. The secondary cooling circuit **2** comprises a coolant pump **9** which effects circulation of the coolant in the circuit so that inter alia it passes a heat exchanger or cooling element **10** situated in the vehicle's cab. Air is blown through the cooling element **10** by an undepicted fan and the air which passes through the cooling element is cooled in relation to the coolant's temperature. A temperature sensor **11** is connected to a control circuit **12** which regulates the switching on and off of the compressor **4.** The air in the cab can thus be kept at a preset temperature even when the vehicle is travelling in warm surroundings.

**Figure 2** shows how the compressor **4** in the refrigerant circuit 3 according to Figure 1 can in a known manner be regulated. Control may be conducted on the basis of predetermined switch-on and switch-off temperatures so that the temperature in the cab can be kept as even as possible and not vary too much. When the air which has passed the cooling element **10** reaches a temperature above, for example, plus 7 degrees, the compressor **4** starts and the refrigerant circuit **3** begins to actively cool the coolant down via the evaporator **6.** When the temperature of the air after passing through the cooling element **10** falls to below plus 3 degrees, the compressor **4** stops. The compressor **4** may alternatively be run at uniform intervals whereby it may typically operate for a certain number of seconds per, for example, 30 second period. The regulation of the compressor **4** is conducted in such a way that the air temperature in the cooling element **10** situated in the cab will not fall below zero degrees, since the condensate which substantially always forms in the cooling element **10** would then risk freezing, which would seriously disturb the functioning of the cooling system 1. The control process is repeated until the cooling system is switched off manually.

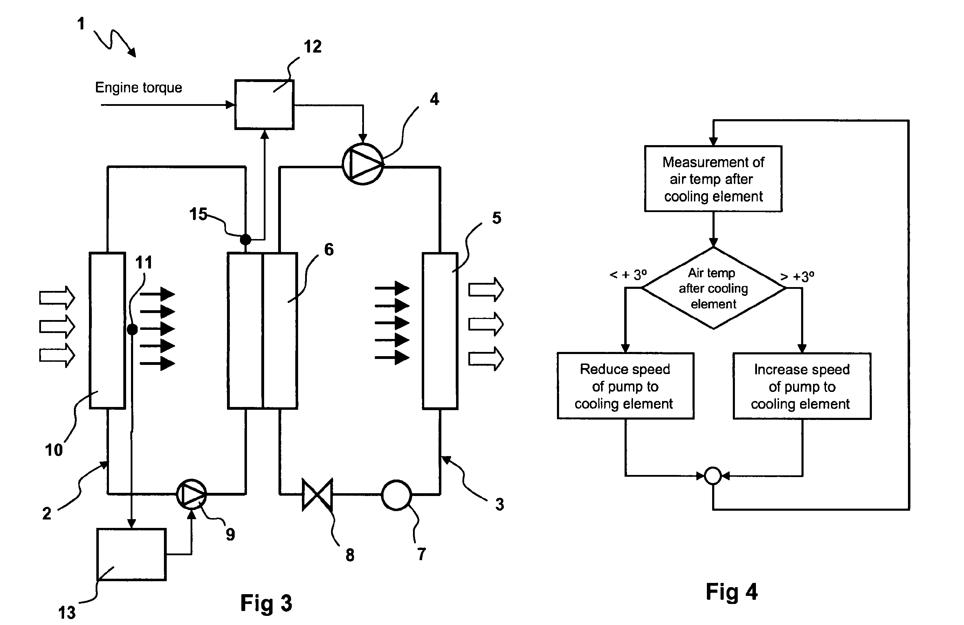

**Figure 3** shows schematically the configuration according to the invention of a compressor-driven cooling system **1.** Via an evaporator **6** with a co-assembled and liquid-based heat exchanger, a refrigerant circuit **3** cools the coolant in a secondary cooling circuit **2** which itself cools a cooling element **10** situated in, for example, the cab. A first temperature sensor **11** delivers to a first control unit **13** a signal representing the temperature of the air which has passed the cooling element **10.** The control unit **13** regulates the speed of the coolant pump **9.** A second control unit **12** is adapted to regulating the switching on and off of the compressor **4,** inter alia on the basis of current torque from the engine and of the coolant's temperature after the evaporator **6,** which is measured by a second temperature sensor **15.**

**Figure 4** depicts a flowchart of how the coolant pump **9** is regulated by a first control unit **13** in a cooling system **1** according to the invention. The temperature of the air is measured by the temperature sensor **11** after the air has passed the cab's cooling element **10.** The first control unit **13** is adapted to regulating the coolant pump **9** so that a predetermined set-point value for the temperature of the air is reached. If the set-point value is set at plus 3 degrees, the control unit **13** raises the speed of the coolant pump **9,** and increases the flow in the cooling circuit **2,** if the air temperature is higher than plus 3 degrees, and lowers the speed, and the flow in the cooling circuit **2,** if the air temperature is lower than plus 3 degrees. If the air through the cooling element **10** is kept at about 3 degrees, the result is a sufficient margin against freezing and, as previously mentioned, it is important that the air temperature should not fall to zero degrees or below. The set-point value is of course selectable and can be adapted to the technical characteristics of the cooling element **10,** e.g. whether it is a crossflow or a crossflow-counterflow heat exchanger. For comfort reasons, the set-point value may also be set at a higher value than plus 3 degrees.

For purely practical the control of the coolant pump **9** may be conducted differently. For example, a feedback regulator may be used or the coolant pump **9** may be controlled by mapping, i.e. by the speed at which the coolant pump **9** is to operate at various air temperatures being predetermined and, for example, being set out in a table in the control unit **13.** The regulator may also be adapted to controlling the coolant pump **9** so that the speed is proportional to the error, i.e. to the current deviation in temperature from the appointed set-point value. It is also conceivable for the regulator to control the coolant pump **9** on the basis of the derivative of the error. If the temperature of the air is for example 2.9 degrees and the derivative such that the temperature may be expected to be relatively stable at 2.9 degrees, the speed is reduced only slightly. If however the temperature of the air is 0 degrees and the derivative is high, i.e. the temperature is changing quickly, the speed of the coolant pump **9** is reduced greatly.

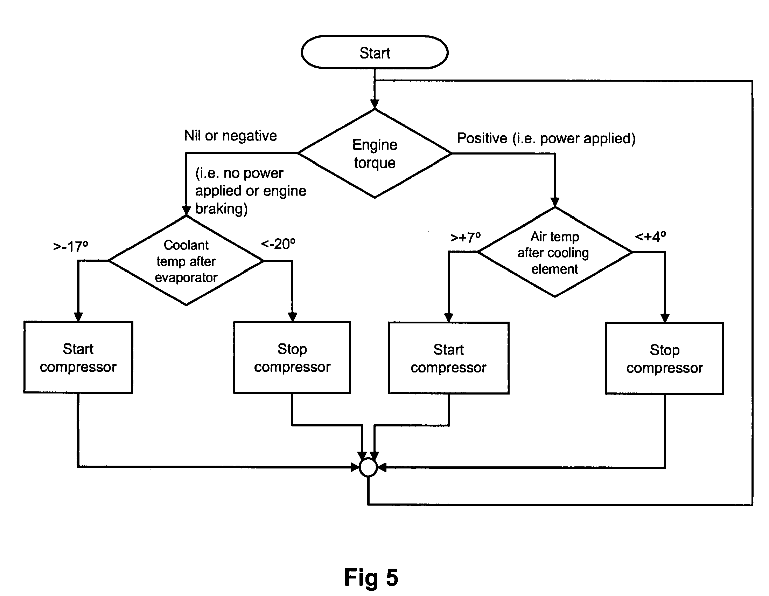

**Figure 5** depicts a flowchart of how the compressor **4** is regulated, e.g. in the second control unit **12,** in a cooling system **1** according to the invention and thereby effects a desired storage of cold in the secondary cooling circuit **2.** When the engine torque is close to zero or negative, i.e. when the driver is applying very little or no power or the vehicle is being braked, the compressor **4** operates to the greatest possible extent in order to cool the coolant which is in the secondary cooling circuit **2.** These situations may primarily be expected to occur when the vehicle is travelling on downgrades where energy would otherwise be braked away. The coolant, e.g. in the form of a water and glycol mixture, can be cooled down to about minus 20 degrees. At lower temperatures, the water and glycol mixture may become too viscous for the system to function satisfactorily. If the coolant's temperature after it has passed the evaporator **6** is lower than, for example, minus 20 degrees, the compressor **4** will therefore stop. With the object of reducing the number of switchings on and off of the compressor **4** and achieving a certain desired hysteresis function, the compressor **4** will only start at a coolant temperature of, for example, minus 17 degrees.

If the engine's torque is positive, i.e. if the driver is applying power, the cooling system **1** has to operate less and substantially operate normally, i.e. not cooling the coolant more than when really necessary, since it adversely affects the vehicle's fuel consumption. When the temperature of the air after passing through the cab's cooling element **10** reaches down to below plus 4 degrees, the compressor **4** will stop, and when the temperature of the air reaches up to above plus 7 degrees, the compressor will start. These temperature limits may of course be set at other values.

The control of the compressor **4** and the coolant pump **9** is conducted independently of one another.

In a normal operating situation, e.g. when the vehicle is travelling on a long straight highway at substantially constant speed and applying little power, the coolant pump **9** normally operates at maximum speed all the time, whereas the compressor **4** switches on and off in a normal way, i.e. the compressor **4** starts when the air temperature reaches above plus 7 degrees, and the compressor stops when the air temperature falls to plus 4 degrees or below. Only when the air temperature after the cooling element **10** falls to below plus 3 degrees is the speed of the coolant pump **9** reduced.

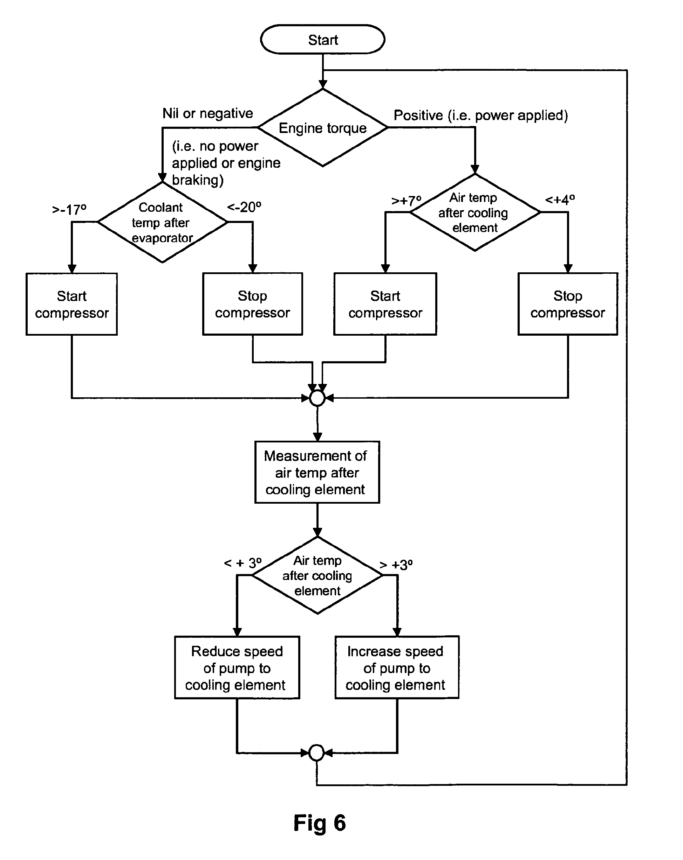

**Figure 6** depicts a comprehensive flowchart in which the flows according to figures 4 and 5 are combined to form a single common flow. It is thus conceivable for the control of the compressor **4** and coolant pump **9** to be conducted in the same process even if the regulation of the units does not take place in any direct relationship to one another.

The invention is described above with reference to various possible embodiments. The invention is of course not limited to those embodiments, which are only to be regarded as examples. Other variants of the invention are therefore perfectly possible within the scope of protection of the attached claims. Thus the flow in the cooling circuit **2** may be controlled in some other way than by regulating the speed of the coolant pump **9.** It is for example possible to use an adjustable valve (not depicted) which can be opened and closed step by step or gradually. In such cases, the first control unit **13** is used to control the valve instead of the coolant pump **9,** which means that the latter can then run at constant speed. The temperature levels used for the control of the coolant pump **9** and compressor **4** and indicated in the drawings are of course merely examples.

## Claims

1. A method for storage of cold in a vehicle-based cooling system (1), comprising cooling of a liquid by means of a compressor-driven refrigerant circuit (3) with at least a condenser (5) and an evaporator (6), in which at least the evaporator (6) is co-assembled with a liquid-based heat exchanger, and a low-temperature cooling circuit (2) provided with a coolant pump (9) for conveying preferably cold coolant to a cooling element (10), the method comprising the steps of:
- cooling the coolant which is in the cooling circuit (2) down to a temperature below zero degrees when the torque delivered by the engine is substantially nil or negative, and
- regulating the coolant's flow velocity through the secondary cooling circuit (2) so that the flow to the cooling element (10) increases if the air temperature after the cooling element (10) is higher than a predetermined set-point value, and the flow decreases if the air temperature after the cooling element (10) is lower than the set-point value,
**characterised by**
- controlling the coolant's flow velocity in the cooling circuit (2) and the coolant's temperature downstream of the evaporator (6) so that freezing of condensate in the cooling element (10) is prevented.

2. A method according to claim 1,
**characterised by**
- controlling the compressor (4) so that the coolant is cooled down at least to minus 15 degrees and preferably to about minus 20 degrees.

3. A method according to claim 1 or 2,
**characterised by**
- controlling the coolant's flow velocity in the cooling circuit (2) by means of a coolant pump (9) whose speed is regulated on the basis of a predetermined set-point value of between 0 and 15 degrees and preferably about 3 degrees.

4. A method according to any one of claims 1-3,
**characterised by**
- cooling the coolant which is in the secondary cooling circuit (2) by means of a compressor-driven refrigerant circuit (3).

5. A system for making increased storage of cold possible in a vehicle-based cooling system (1), comprising a compressor-driven refrigerant circuit (3) provided with at least a condenser (5) and an evaporator (6), in which at least the evaporator (6) is co-assembled with a liquid-based heat exchanger, and a low-temperature cooling circuit (2) provided with a coolant pump (9) for conveying preferably cold coolant to a cooling element (10), where:
- the refrigerant circuit (3) is adapted to cooling the coolant which is in the cooling circuit (2) down to a temperature below zero degrees when the torque delivered by the engine is substantially nil or negative,
- a first control unit (13) is adapted to controlling the coolant's flow velocity through the secondary cooling circuit (2) so that the flow to the cooling element (10) increases if the air temperature after the cooling element (10) is higher than a predetermined set-point value, and the flow decreases if the air temperature after the cooling element (10) is lower than the set-point value, and
**characterised**
- **in that** the first control unit (13) is adapted to regulating the coolant's flow velocity through the cooling circuit (2) and the coolant's temperature downstream of the evaporator (6) so that freezing of condensate in the cooling element (10) is prevented.

6. A system according to claim 5,
**characterised**
- **in that** a second control unit (12) is adapted to controlling the compressor (4) so that the coolant is cooled down at least to minus 15 degrees and preferably to about minus 20 degrees.

7. A method according to claim 5 or 6,
**characterised**
- **in that** the coolant pump (9) is adapted to controlling the coolant's flow velocity in the cooling circuit (2) and through the cooling element (10) by means of a coolant pump (9) whose speed is regulated on the basis of a predetermined set-point value of between 0 and 15 degrees and preferably about 3 degrees.

8. A system according to any one of claims 5-7,
**characterised**
- **in that** the evaporator (6) of the compressor-driven refrigerant circuit (3) is adapted to cooling the coolant in the secondary cooling circuit (2).

## Patentansprüche

1. Verfahren zum Speichern von Kälte in einer Fahrzeugklimaanlage (1), umfassend das Kühlen einer Flüssigkeit mittels eines kompressorgetriebenen Kältekreislaufs (3) mit mindestens einem Kondensator (5) und einem Verdampfer (6), wobei zumindest der Verdampfer (6) mit einem auf Flüssigkeit basierenden Wärmetauscher mitverbaut wird, und einen Niedertemperaturkühlkreislauf (2), der eine Kühlmittelpumpe (9) zum Fördern von vorzugsweise kaltem Kühlmittel zu einem Kühlelement (10) aufweist, wobei das Verfahren die Schritte umfasst:
- Kühlen eines Kühlmittels, das in dem Kühlkreislauf (2) vorhanden ist, bis zu einer Temperatur unter 0°, wenn das von dem Motor gelieferte Drehmoment im Wesentlichen 0 oder negativ ist, und
- Regulieren der Strömungsgeschwindigkeit des Kühlmittels durch einen zweiten Kühlkreislauf (2), so dass sich die Strömung zu dem Kühlelement (10) erhöht, wenn die Lufttemperatur nach dem Kühlelement (10) höher als ein vorbestimmter Sollwert ist, und sich die Strömung verringert, wenn die Lufttemperatur nach dem Kühlelement (10) niedriger als der Sollwert ist,
**dadurch gekennzeichnet, dass**
- die Strömungsgeschwindigkeit des Kühlmittels in dem Kühlkreislauf (2) und die Kühlmitteltemperatur ablaufseitig des Verdampfers (6) geregelt wird, dass das Einfrieren des Kondensats im Kühlelement (10) verhindert wird.

2. Verfahren nach Anspruch 1,
**dadurch gekennzeichnet, dass** der Kompressor (4) derart geregelt wird, dass das Kühlmittel bis zumindest -15° und vorzugsweise bis ungefähr -20° gekühlt wird.

3. Verfahren nach Anspruch 1 oder 2,
**dadurch gekennzeichnet, dass** die Strömungsgeschwindigkeit des Kühlmittels in dem Kühlkreislauf (2) mittels einer Kühlmittelpumpe (9) gesteuert wird, deren Geschwindigkeit auf der Grundlage eines vorgegebenen Sollwerts zwischen 0° und 15° und vorzugsweise etwa 3° geregelt wird.

4. Verfahren nach einem der Ansprüche 1 bis 3,
**dadurch gekennzeichnet, dass** das Kühlmittel, das in dem zweiten Kühlkreislauf vorliegt, mittels eines kompressorgetriebenen Kältekreislaufs (3) gekühlt wird.

5. System zum Ermöglichen einer erhöhten Kältespeicherung in einer Fahrzeugklimaanlage (1), wobei das System umfasst: einen kompressorgetriebenen Kältekreislauf (3), der zumindest einen Kondensator (5) und einen Verdampfer (6) aufweist, wobei zumindest der Verdampfer (6) mit einem auf Flüssigkeit basierenden Wärmetauscher mitverbaut ist, und einen Niedertemperaturkühlkreislauf (2), der eine Kühlmittelpumpe (9) zum Fördern von vorzugsweise kaltem Kühlmittel zu einem Kühlelement (10) aufweist, wobei
- der Kältekreislauf (3) dazu geeignet ist, um das Kältemittel, das in dem Kühlkreislauf (2) vorliegt, bis zu einer Temperatur unter 0° zu kühlen, wenn das von dem Motor gelieferte Drehmoment im Wesentlichen 0 oder negativ ist,
- eine erste Steuereinheit (13) dazu geeignet ist, um die Strömungsgeschwindigkeit des Kältemittels durch den zweiten Kühlkreislauf (2) zu regeln, so dass sich die Strömung zu dem Kühlelement (10) erhöht, wenn die Lufttemperatur nach dem Kühlelement (10) höher als ein vorbestimmter Sollwert ist, und die Strömung sich verringert, wenn die Lufttemperatur nach dem Kühlelement (10) niedriger als der Sollwert ist, **dadurch gekennzeichnet, dass** die erste Steuereinheit (13) dazu geeignet ist, um die Strömungsgeschwindigkeit des Kältemittels durch den Kühlkreislauf (2) und die Temperatur des Kühlmittels ablaufseitig des Verdampfers (6) zu regeln, so dass ein Einfrieren des Kondensats in dem Kühlelement (10) verhindert wird.

6. System nach Anspruch 5,
**dadurch gekennzeichnet,**
- **dass** eine zweite Steuereinheit (12) dazu geeignet ist, um den Kompressor (4) zu regeln, so dass das Kältemittel bis zumindest -15° und vorzugsweise etwa -20° gekühlt wird.

7. Verfahren nach Anspruch 5 oder 6,
**dadurch gekennzeichnet,**
- **dass** die Kühlmittelpumpe (9) dazu geeignet ist, um die Strömungsgeschwindigkeit des Kältemittels in dem Kühlkreislauf (2) und durch das Kühlelement (10) mittels Kühlmittelpumpe (9) zu steuern, deren Geschwindigkeit auf der Grundlage eines vorgegebenen Sollwerts zwischen 0° und 15° und vorzugsweise etwa 3° geregelt wird.

8. System nach einem der Ansprüche 5 bis 7,
**dadurch gekennzeichnet,**
- **dass** der Verdampfer (6) des kompressorgetriebenen Kältekreislaufs (3) dazu geeignet ist, um das Kältemittel in dem zweiten Kühlkreislauf (2) zu kühlen.

## Revendications

1. Procédé pour stocker du froid dans un système de refroidissement de véhicule (1), consistant à refroidir un liquide au moyen d'un circuit de fluide frigorigène commandé par un compresseur (3) et comprenant au moins un condenseur (5) et un évaporateur (6), dans lequel au moins l'évaporateur (6) est co-assemblé à un échangeur de chaleur à liquide, et d'un circuit de refroidissement à basse température (2) comportant une pompe à fluide de refroidissement (9) destinée à transférer du fluide de refroidissement, de préférence froid, à un élément de refroidissement (10), le procédé comprenant les étapes consistant à :
- refroidir le fluide de refroidissement qui se trouve dans le circuit de refroidissement (2) à une température inférieure à zéro degré lorsque le couple développé par le moteur est sensiblement nul ou négatif, et
- réguler la vitesse du flux de fluide de refroidissement dans le circuit de refroidissement secondaire (2) de manière que le flux dirigé vers l'élément de refroidissement (10) croisse si la température de l'air en aval de l'élément de refroidissement (10) est supérieure à une valeur de point de consigne prédéterminée, et que le flux décroisse si la température de l'air en aval de l'élément de refroidissement (10) est inférieure à la valeur du point de consigne,
**caractérisé**
- **en ce qu'**on commande la vitesse du flux de fluide de refroidissement dans le circuit de refroidissement (2) et la température du fluide de refroidissement en aval de l'évaporateur (6) de manière que la congélation du condensat dans l'élément de refroidissement soit évitée.

2. Procédé selon la revendication 1, **caractérisé en ce qu'**on commande le compresseur (4) de manière que le fluide de refroidissement soit refroidi au moins à moins 15 degrés et de préférence à environ moins 20 degrés.

3. Procédé selon la revendication 1 ou 2, **caractérisé en ce qu'**on commande la vitesse du flux de fluide refroidissement dans le circuit de refroidissement (2) au moyen d'une pompe à fluide de refroidissement (9) dont la vitesse est régulée sur la base d'une valeur de point de consigne prédéterminée, d'entre 0 et 15 degrés et de préférence égale à environ 3 degrés.

4. Procédé selon une quelconque des revendications 1 à 3, **caractérisé en ce qu'**on refroidit le fluide de refroidissement qui se trouve dans le circuit de refroidissement secondaire (2) au moyen d'un circuit de fluide frigorigène (3) commandé par un compresseur.

5. Système pour rendre possible un plus grand stockage de froid dans un système de refroidissement de véhicule (1), comprenant un circuit de fluide frigorigène (3) commandé par un compresseur comportant au moins un condenseur (5) et un évaporateur (6), dans lequel au moins l'évaporateur (6) est co-assemblé à un échangeur de chaleur à liquide, et un circuit de refroidissement à basse température (2) comportant une pompe à fluide de refroidissement (9) destinée à transférer du fluide de refroidissement froid à un élément de refroidissement (10), où
- le circuit de fluide frigorigène (3) est configuré pour refroidir le fluide de refroidissement qui se trouve dans le circuit de refroidissement (2) à une température inférieure à zéro degré lorsque le couple développé par le moteur est sensiblement nul ou négatif,
- une première unité de commande (13) est adaptée pour commander la vitesse du flux de fluide refroidissement dans le circuit de refroidissement secondaire (2) de manière que le flux dirigé vers l'élément de refroidissement (10) croisse si la température de l'air en aval de l'élément de refroidissement (10) est supérieure à une valeur de point de consigne prédéterminée et que le flux décroisse si la température de l'air en aval de l'élément de refroidissement (10) est inférieure à la valeur du point de consigne, et
**caractérisé en ce que** la première unité de commande (13) est adaptée pour réguler la vitesse du flux de fluide refroidissement dans le circuit de refroidissement (2) et la température en aval de l'évaporateur (6) de manière que la congélation du condensat dans l'élément de refroidissement (10) soit évitée.

6. Système selon la revendication 5, **caractérisé en ce qu'**un second circuit de commande (12) est adapté pour commander le compresseur (4) de manière que le fluide de refroidissement soit refroidi à au moins à moins 15 degrés et de préférence à environ moins 20 degrés.

7. Procédé selon la revendication 5 ou 6, **caractérisé en ce que** la pompe à fluide de refroidissement (9) est adaptée pour commander la vitesse du flux de fluide refroidissement dans le circuit de refroidissement (2) et dans l'élément de refroidissement (10) au moyen d'une pompe à fluide de refroidissement (9) dont la vitesse est régulée sur la base d'une valeur de point de consigne prédéterminée d'entre 0 et 15 degrés, et de préférence égale à environ 3 degrés.

8. Système selon une quelconque des revendications 5 à 7, **caractérisé en ce que** l'évaporateur (6) du circuit de fluide frigorigène commandé par un compresseur (3) est adapté pour refroidir le fluide de refroidissement qui se trouve dans le circuit de refroidissement secondaire (2).
